(19) Europäisches Patentamt
European Patent Office
Office européen des brevets

(11) Veröffentlichungsnummer : **0 082 819**
**B1**

(12) # EUROPÄISCHE PATENTSCHRIFT

(45) Veröffentlichungstag der Patentschrift : **04.03.87**

(21) Anmeldenummer : **82810544.5**

(22) Anmeldetag : **15.12.82**

(51) Int. Cl.⁴ : **C 09 B 45/20**, D 06 P 3/32, D 06 P 3/30// D06P1/10

(54) **Verwendung von 1:2-Kobaltkomplexfarbstoffen zum Färben von Leder oder Pelzen.**

(30) Priorität : **21.12.81 CH 8158/81**

(43) Veröffentlichungstag der Anmeldung : **29.06.83 Patentblatt 83/26**

(45) Bekanntmachung des Hinweises auf die Patenterteilung : **04.03.87 Patentblatt 87/10**

(84) Benannte Vertragsstaaten : **CH DE FR GB IT LI**

(56) Entgegenhaltungen :
**EP-A- 0 019 128**
**EP-A- 0 022 067**
**CH-A- 161 814**
**CH-A- 382 888**
**DE-B- 1 023 539**
**GB-A- 783 610**
**GB-A- 1 535 585**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Püntener, Alois, Dr.**
**Pulverweg 13**
**CH-4310 Rheinfelden (CH)**

**EP 0 082 819 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Farbstoffen der Formel I

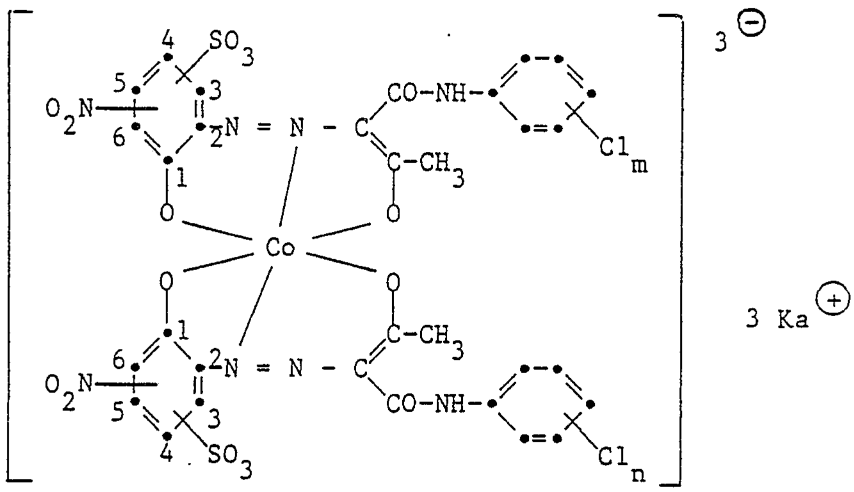

(I)

worin Ka⊕ ein Kation und m und n unabhängig voneinander je 1 oder 2 bedeuten und die Sulfo- und Nitrogruppen in 4- oder 6-Stellung stehen, wobei der Farbstoff (XI) von Seite 12 der EP-A-61 670 ausgenommen ist, zum Färben von Leder oder Pelzen.

Ka⊕ stellt ein Kation, beispielsweise ein Alkalikation, wie Lithium, Kalium oder vorzugsweise Natrium, dar. Ferner kann Ka⊕ ein Ammoniumkation oder das Ammoniumsalz eines organischen Amins sein.

Die Nitrogruppen sind in 4- oder 6-Stellung, insbesondere in 4-Stellung der Diazokomponenten angeordnet. m und n bedeuten vorzugsweise jeweils 1.

Die Sulfogruppen befinden sich vorzugsweise in 6-Stellung der Diazokomponenten.

In den 1 : 2-Kobaltkomplexfarbstoffen der obigen Formel I können die beiden Azofarbstoffe verschieden sein. Vorzugsweise sind sie jedoch gleich.

Geeignete Diazokomponenten für die Farbstoffe der Formel I sind : 1-Hydroxy-2-amino-4-nitrobenzol-6-sulfonsäure und 1-Hydroxy-2-amino-6-nitrobenzol-4-sulfonsäure.

Als Kupplungskomponenten kommen z. B. die folgenden in Betracht : Acetoessigsäure-2-chloranilid, Acetoessigsäure-3-chloranilid, Acetoessigsäure-4-chloranilid, Acetoessigsäure-2,5-dichloranilid.

Die 1 : 2-Kobaltkomplexe werden auf die übliche Weise hergestellt, z. B. indem man die metallfreien Azofarbstoffe im Verhältnis 1 : 2 mit einem kobaltabgebenden Mittel umsetzt. Zur Einführung des Metalls verwendet man im allgemeinen Kobalt-(II)-salze, wie z. B. Kobaltsulfat, -acetat oder -chlorid — mit oder ohne Zusatz von Oxidationsmitteln — oder auch den Kobalt-(III)-amin-Komplex.

Die oben erwähnten Salze können auch in Gegenwart von Komplexbildnern, wie z. B. Weinsäure, Salicylsäure oder Milchsäure, verwendet werden. Die kobaltabgebenden Mittel werden in stöchiometrischer Menge oder im Ueberschuss eingesetzt. Es können Gemische oder einheitliche Monoazofarbstoffe metallisiert werden. Im ersten Fall erhält man ein Gemisch von symmetrischen und asymmetrischen Metallkomplexen.

Die 1 : 2-Kobaltkomplexe werden zum Färben von Pelzen oder vorzugsweise von Leder verwendet, wobei alle Ledersorten geeignet sind, z. B. Chromleder, nachgegerbtes Leder oder Velourleder von Ziege, Rind oder Schwein. Sie zeichnen sich vor allem durch einen guten Aufbau auf Leder aus.

Man erhält gedeckte gelbe oder gelbbraune bis orangebraune Färbungen sehr guter Echtheiten, insbesondere Licht- und Nassechtheiten.

Aus der EP-A-0 019 128 sind bereits ähnliche 1 : 2-Kobaltkomplexfarbstoffe bekannt, welche jedoch im Gegensatz zu den erfindungsgemäss verwendeten Farbstoffen nur eine Sulfogruppe aufweisen.

Die nachfolgenden Beispiele dienen der Erläuterung der Erfindung. Teile bedeuten Gewichtsteile und Prozente Gewichtsprozente. Die Temperaturen sind in Grad Celsius angegeben.

Beispiel 1

100 Teile Bekleidungsvelourleder werden bei 50° in einer Lösung von 1 000 Teilen Wasser und 2 Teilen 24 %igem Ammoniak während 2 Stunden aufgewalkt und anschliessend bei 60° in einer Lösung von 1 000 Teilen Wasser, 2 Teilen 24 %igem Ammoniak und 3 Teilen des Farbstoffes der Formel

(Siehe Formel Seite 3 f.)

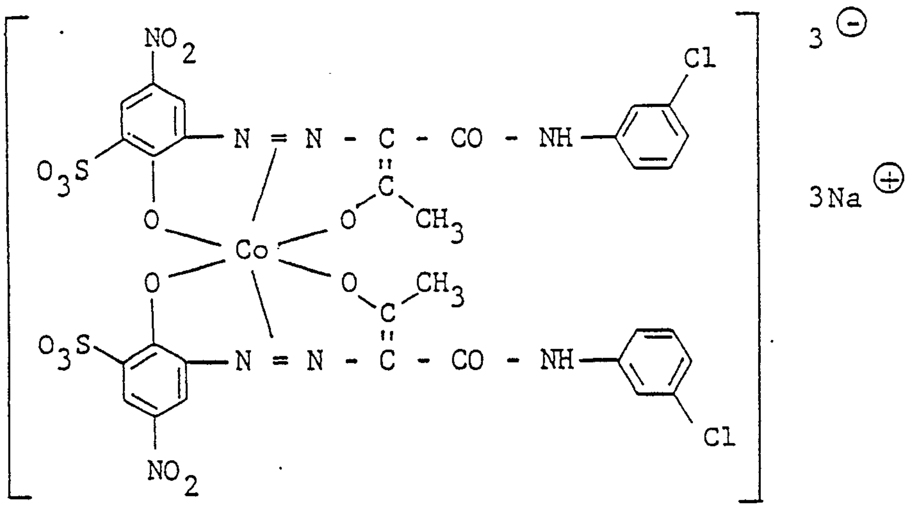

während 1 Stunde gefärbt. Hierauf gibt man eine Lösung von 40 Teilen Wasser und 4 Teilen 85 %iger Ameisensäure zu und färbt noch weitere 30 Minuten. Dann wird das Leder gut gespült und gegebenenfalls noch mit 2 Teilen eines Dicyandiaminoformaldehyd-Kondensationsproduktes während 30 Minuten bei 50° behandelt. Man erhält eine gelbe Färbung mit vorzüglichen Echtheiten.

Der eingesetzte Farbstoff wurde folgendermassen hergestellt :

91 Teile des Monoazofarbstoffes, der erhalten wurde durch Kuppeln von diazotierter 4-Nitro-2-amino-1-hydroxybenzol-6-sulfonsäure auf Acetoessigsäure-3-chloranilid, werden mit 4 Teilen Natriumhydroxid in 1 000 Teile 80° warmes Wasser eingetragen, mit 30 Teilen 1-Nitrobenzol-3-sulfonsäure und 60 Teilen einer 1 molaren Kobaltsulfatlösung versetzt und mit 2 molarer Natronlauge bei pH 7 bis 9 gehalten. Die Reaktionslösung wird solange bei 80 bis 90° gerührt, bis die Metallisierung beendet ist. Das Wasser wird am Rotationsverdampfer abgezogen und man erhält ein Pulver, welches Leder in einem gelben Farbton mit vorzüglichen Echtheiten färbt.

## Beispiele 2 bis 5

Arbeitet man wie im Beispiel 1 beschrieben, verwendet jedoch die 1 : 2-Kobaltkomplexe der in der folgenden Tabelle verzeichneten Farbstoffe, so erhält man mit guten Echtheiten in der angegebenen Nuance gefärbte Leder.

| Beispiel | Monoazofarbstoff | |
|---|---|---|
| 2 | 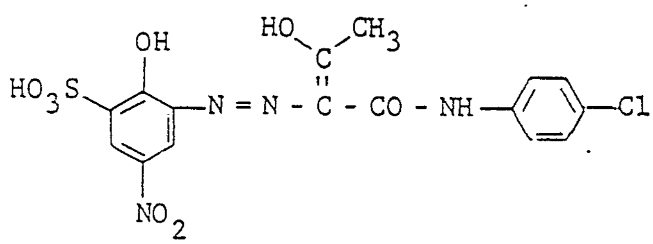 | gelb |
| 3 | 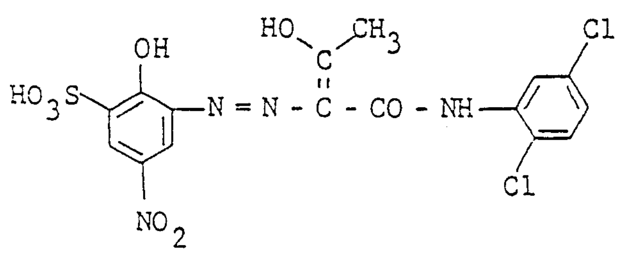 | gelb |

4

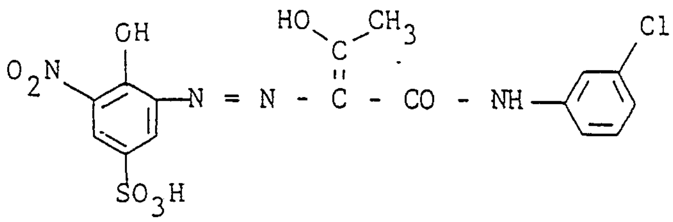

orange-braun

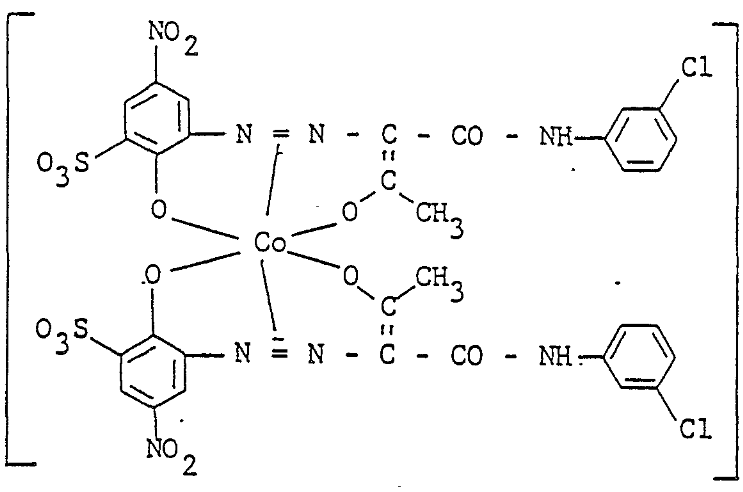

$3^{\ominus}$

$3\ Na^{\oplus}$

5

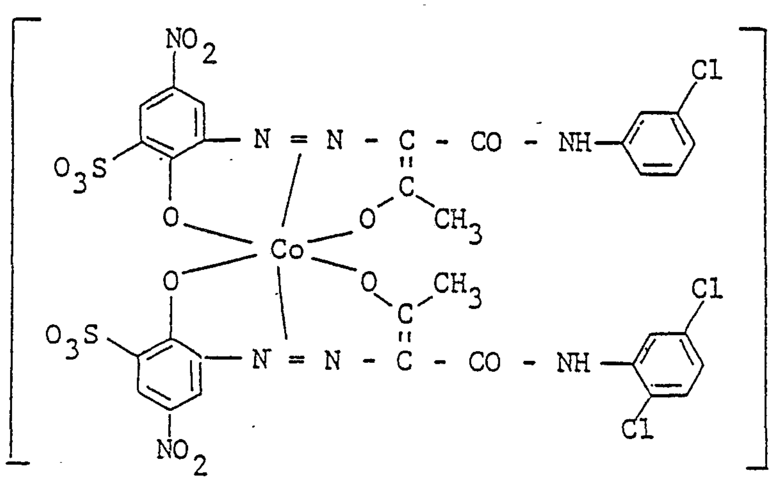

$3^{\ominus}$

$3\ Na^{\oplus}$, gelb

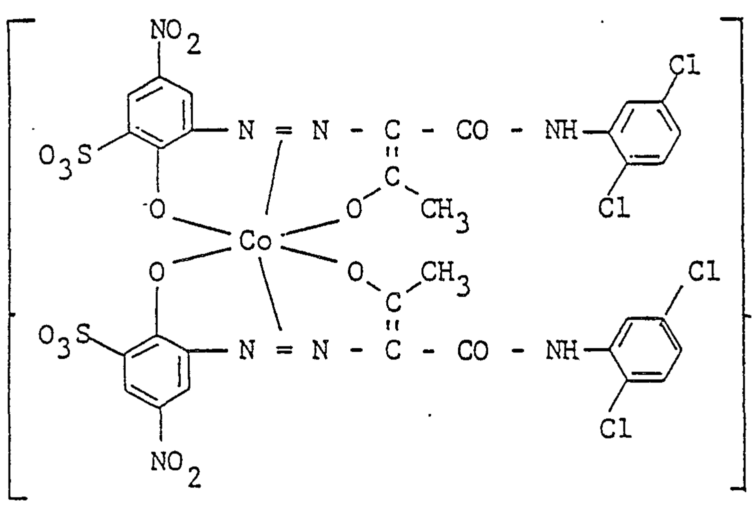

$3^{\ominus}$

$3\ Na^{\oplus}$

Das Farbstoffgemisch gemäss Beispiel 5 wurde folgendermassen erhalten :

45,5 Teile des Monoazofarbstoffes, der erhalten wurde durch Kuppeln von diazotierter 4-Nitro-2-amino-1-hydroxybenzol-6-sulfonsäure auf Acetoessigsäure-3-chloranilid, und 49 Teile des Monoazofarbstoffes, der analog aus der gleichen Diazokomponente und Acetoessigsäure-2,5-dichloranilid als Kupplungskomponente hergestellt wurde, werden analog Beispiel 1 metallisiert und isoliert.

Beispiel 6

100 Teile chromgares Bekleidungsvelourleder der Falzstärke 0,9 mm werden in einem gebräuchlichen mit 1 000 Teilen Wasser und 2 Teilen Ammoniak 24 %ig beschickten trommelförmigen Glasgefäss während 60 Minuten bei 50° aufgewalkt. Danach folgt ein Waschprozess von 15 Minuten Dauer in 1 000 Teilen Wasser von 50°.

Nach diesen vorbereitenden Operationen wird das Leder in einer Flotte aus 1 000 Teilen Wasser, 2 Teilen Ammoniak 24 %ig, 0,28 Teilen des gelben Farbstoffes aus Beispiel 2, 0,23 Teilen des roten Farbstoffes der Formel

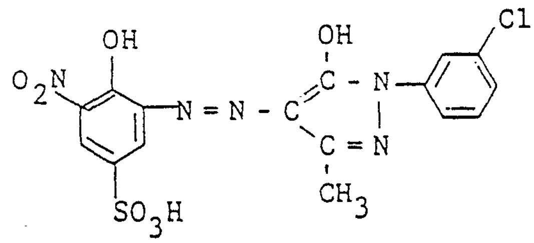

1 : 2-Chromkomplex

und 0,125 Teile des blauen Farbstoffes der Formel

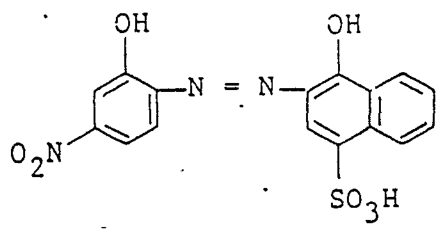

1 : 2-Chromkomplex

bei 50° gefärbt.

Nach einer Färbedauer von 60 Minuten wird mit 2 Teilen Ameisensäure 85 %ig, verdünnt mit 20 Teilen Wasser, angesäuert und hierauf noch 20 Minuten weitergefärbt.

Die Fertigstellung des gefärbten Leders erfolgt nach gründlichem Spülen in frischem Wasser und gegebenenfalls einer Behandlung mit 2 Teilen eines Dicyandiaminoformaldehyd-Kondensationsproduktes während 30 Minuten bei 50° in üblicher Weise.

Das erhaltene gefärbte Leder besitzt einen mittelbraunen Farbton. Es zeichnet sich durch gute Egalität und Echtheiten, insbesondere eine gute Lichtechtheit, aus.

**Patentansprüche**

1. Verwendung von Farbstoffen der Formel I

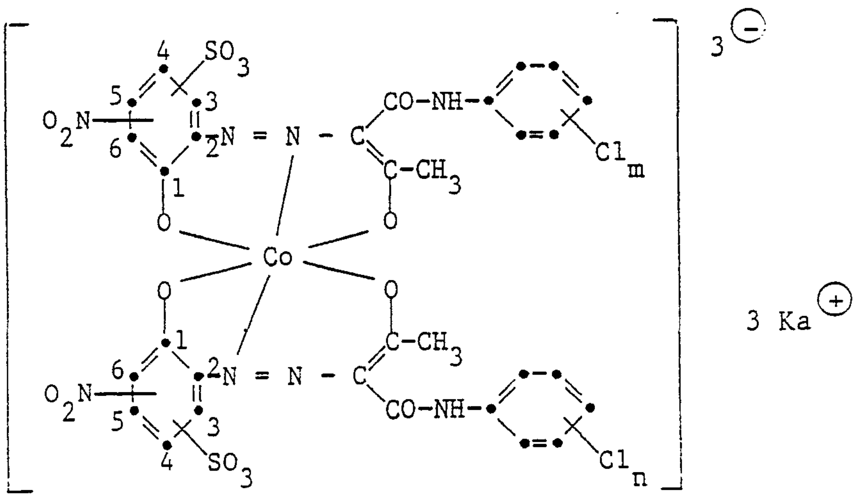

(I)

worin Ka⊕ ein Kation und m und n unabhängig voneinander je 1 oder 2 bedeuten und die Sulfo- und Nitrogruppen in 4- oder 6-Stellung stehen, wobei der Farbstoff (XI) von Seite 12 der EP-A-61 670 ausgenommen ist, zum Färben von Leder oder Pelzen.

2. Verwendung gemäss Anspruch 1 von Farbstoffen der Formel I, worin die Nitrogruppen in 4-Stellung und die Sulfogruppen in 6-Stellung der Diazokomponenten angeordnet sind.

3. Verwendung gemäss Ansprüchen 1 oder 2 von Farbstoffen der Formel I, worin m und n jeweils 1 bedeuten.

4. Verwendung gemäss Ansprüchen 1 bis 3 von Farbstoffen der Formel I, worin die beiden an Kobalt gebundenen Azofarbstoffe gleich sind.

5. Verwendung von Farbstoffen der Formel I zum Färben von Leder.

**Claims**

1. Use of dyes of the formula I

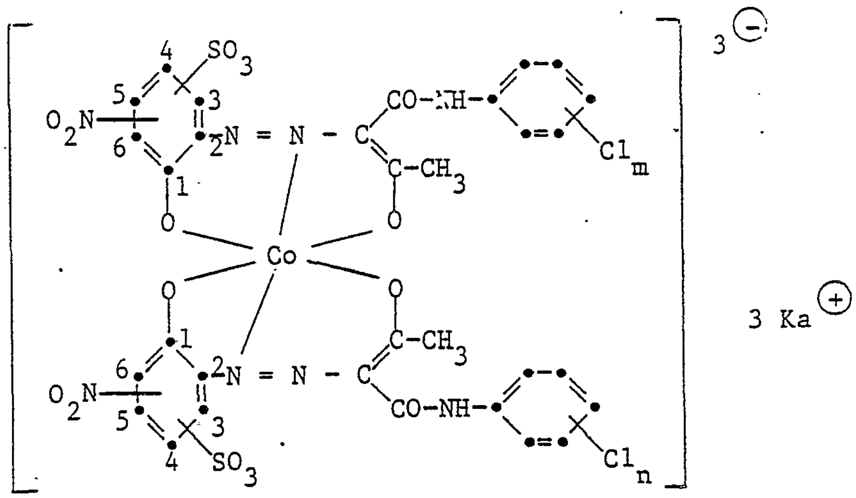

(I)

wherein Ka⊕ is a cation and each of m and n independently of the other is 1 or 2 and the sulfo and nitro groups are in the 4- or 6-position, with the exception of the dye of the formula (XI) of page 12 of published European patent application 61 670, for dyeing leather or furs.

2. Use according to claim 1 of dyes of the formula I, wherein the nitro groups are arranged in the 4-position and the sulfo groups are arranged in the 6-position of the diazo components.

3. Use according to either of claims 1 or 2 of dyes of the formula I, wherein each of m and n is 1.

4. Use according to any one of claims 1 to 3 of dyes of the formula I, wherein the two azo dyes bound to cobalt are identical.

5. Use of dyes of the formula I for dyeing leather.

**Revendications**

1. Utilisation de colorants de formule I

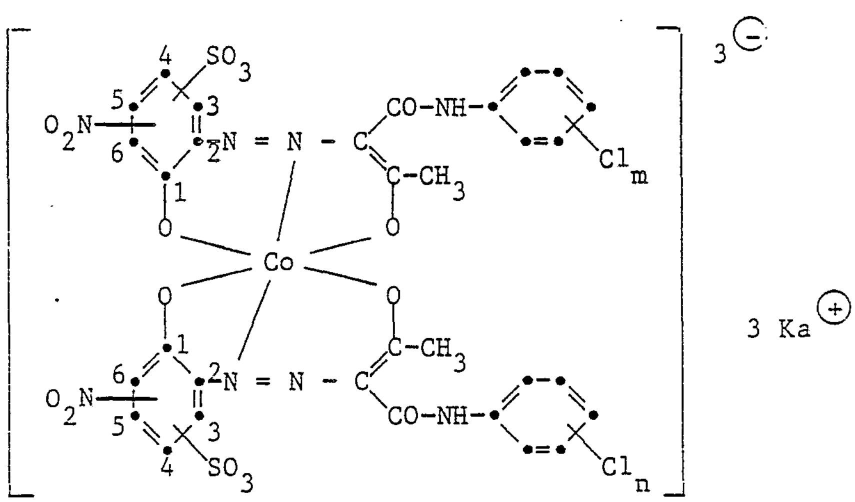

(I)

dans laquelle $Ka^{\oplus}$ représente un cation, m et n, indépendamment l'un de l'autre, représentent chacun le nombre 1 ou 2, et les groupes nitro et sulfo se trouvent en position 4 ou 6, le colorant (XI) de la page 12 de la demande de brevet EP-A-61 670 étant exclu, pour la teinture du cuir ou de fourrures.

2. Utilisation conforme à la revendication 1 de colorants de formule I, dans lesquels les groupes nitro se trouvent en position 4, et les groupes sulfo, en position 6, sur les composants diazoïques.

3. Utilisation conforme aux revendications 1 ou 2 de colorants de formule I, dans lesquels m et n représentent chacun le nombre 1.

4. Utilisation conforme aux revendications 1 à 3 de colorants de formule I, dans lesquels les deux colorants azoïques liés au cobalt sont identiques.

5. Utilisation des colorants de formule I pour la teinture du cuir.